(19) Europäisches Patentamt
European Patent Office
Office européen des brevets

(11) EP 3 757 149 B1

(12) EUROPEAN PATENT SPECIFICATION

(45) Date of publication and mention of the grant of the patent:
**06.04.2022 Bulletin 2022/14**

(21) Application number: **19756587.2**

(22) Date of filing: **20.02.2019**

(51) International Patent Classification (IPC):
***C09J 171/02*** (2006.01) ***C09J 143/04*** (2006.01)
***C09J 201/10*** (2006.01) ***C09J 163/00*** (2006.01)
***C08G 59/50*** (2006.01) ***C08G 59/62*** (2006.01)
***C08G 65/336*** (2006.01) ***C08F 220/18*** (2006.01)

(52) Cooperative Patent Classification (CPC):
(C-Sets available)
**C08G 59/621; C08F 220/18; C08G 59/50; C08G 65/336; C09J 143/04; C09J 163/00; C09J 171/02; C09J 201/10** (Cont.)

(86) International application number:
**PCT/JP2019/006229**

(87) International publication number:
**WO 2019/163804 (29.08.2019 Gazette 2019/35)**

(54) **CURABLE COMPOSITION**

HÄRTBARE ZUSAMMENSETZUNG

COMPOSITION DURCISSABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2018 JP 2018030490**
**31.05.2018 JP 2018105008**

(43) Date of publication of application:
**30.12.2020 Bulletin 2020/53**

(73) Proprietor: **Kaneka Corporation**
**Osaka-shi, Osaka 530-8288 (JP)**

(72) Inventor: **MIYAFUJI, Kiyoshi**
**Takasago-shi, Hyogo 676-8688 (JP)**

(74) Representative: **Vossius & Partner**
**Patentanwälte Rechtsanwälte mbB**
**Siebertstrasse 3**
**81675 München (DE)**

(56) References cited:
**EP-A1- 2 857 436**
**WO-A1-2013/180203**
**WO-A1-2016/002907**
**WO-A1-2017/057719**
**JP-A- 2007 023 255**
**JP-A- 2014 111 783**
**JP-A- 2014 114 434**
**JP-A- 2015 105 324**
**JP-A- 2015 172 119**
**JP-A- 2016 216 633**
**JP-A- 2017 019 908**

EP 3 757 149 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09J 143/04;**
**C09J 163/00;**
**C09J 171/02;**
**C09J 201/10**

## Description

### Technical Field

The present invention relates to a multi-pack curable composition.

### Background Art

To reduce the weight of vehicles, aircraft, and railways, replacement to lightweight materials such as aluminum, magnesium, and carbon fiber composite materials other than steel as structural members has progressed, and multi-materialization in which multiple materials are used for one car body has increased. Since spot welding or laser welding may be difficult for bonding dissimilar materials, adhesive bonding using an adhesive is drawing attention. Since a steel sheet, an aluminum alloy, and a fiber-reinforced composite material have different linear expansion coefficients, the adhesive is required to have flexibility capable of following thermal strain. Thus, an epoxy resin having a high rigidity may be disadvantageous, and therefore, a material having a high elastic modulus and flexibility is required as a new structural adhesive.
As an adhesive, a composition composed of a reactive silicon group-containing polyoxyalkylene polymer and an epoxy resin with both a high strength at break and flexibility is known (see, for example, PTL 1). However, this composition may not have sufficient strength as an adhesive for structural members.
As a reactive silicon group-containing polyoxyalkylene polymer, using a polyoxyalkylene polymer having more than one reactive silicon group at one terminal is known to improve strength, and a combination of the polyoxyalkylene polymer with an epoxy resin (see, for example, PTL 2), a combination with a reactive silicon group-containing (meth)acrylate ester polymer (see, for example, PTL 3), and a combination with an epoxy resin and a reactive silicon group-containing (meth)acrylate ester polymer (see, for example, PTL 4) are also known. However, it is not easy to obtain a cured product having both high rigidity and flexibility capable of following thermal strain, which are required as a structural adhesive.

### Citation List

### Patent Literature

PTL1: JP No. H02-214759 A

PTL2: JP No. 2015-105324 A

PTL 3: WO 2013/180203

PTL4: JP No. 2017-019908 A

### Summary of Invention

### Technical Problem

The present invention has been made in view of the above circumstances, and an object thereof is to provide a curable composition in which a cured product after curing has high strength, high rigidity, and flexibility, and a cured product obtained by curing the curable composition.

### Solution to Problem

The inventors have made eager investigations to solve the above problems, and made the present invention.
That is, the present invention relates to the following.

[1] A multi-pack curable composition including an A agent containing a polyoxyalkylene polymer (A) having a reactive silicon group represented by a general formula (1), a (meth)acrylate ester polymer (B) having a reactive silicon group represented by the general formula (1), and an epoxy resin curing agent (D) having a tertiary amine, and

a B agent containing an epoxy resin (C) and a silanol condensation catalyst (E), in which a weight ratio of the polyoxyalkylene polymer (A):the (meth)acrylate ester polymer (B) is 95:5 to 50:50, a weight ratio of a total of the polyoxyalkylene polymer (A) and the (meth)acrylate ester polymer (B):the epoxy resin (C) is 90:10 to 50:50, and the (meth)acrylate ester polymer (B) contains a polymer containing 40% by weight or more of alkyl (meth)acrylate having 1 to 3 alkyl carbon atoms in a total monomer:

$$-SiX_3 \qquad (1)$$

(where X represents a hydroxyl group or a hydrolyzable group.)

[2] The multi-pack curable composition according to [1], in which the (meth)acrylate ester polymer (B) further contains a polymer containing 40% by weight or more of alkyl (meth)acrylate having 4 to 30 alkyl carbon atoms in the total monomer.

[3] The multi-pack curable composition according to [1], in which the polymer containing 40% by weight or more of alkyl (meth)acrylate having 1 to 3 alkyl carbon atoms in the total monomer is a copolymer further containing 40% by weight or more of alkyl (meth)acrylate having 4 to 30 alkyl carbon atoms in the total monomer.

[4] The multi-pack curable composition according to any one of [1] to [3], in which the weight ratio of the polyoxyalkylene polymer (A):the (meth)acrylate ester polymer (B) is 70:30 to 50:50.

[5] The multi-pack curable composition according to any one of [1] to [4], in which the weight ratio of the total of the polyoxyalkylene polymer (A) and the (meth)acrylate ester polymer (B):the epoxy resin (C) is 80:20 to 60:40.

[6] The multi-pack curable composition according to any one of [1] to [5], in which the epoxy resin curing agent (D) having a tertiary amine is an aromatic amine.

[7] The multi-pack curable composition according to any one of [1] to [6], in which the epoxy resin curing agent (D) having a tertiary amine has three or more amino groups.

[8] The multi-pack curable composition according to any one of [1] to [7], in which the B agent further contains water (F).

[9] The multi-pack curable composition according to any one of [1] to [8], in which a terminal moiety of the polyoxyalkylene polymer (A) has a structure represented by a general formula (2):

[CHEM. 1]

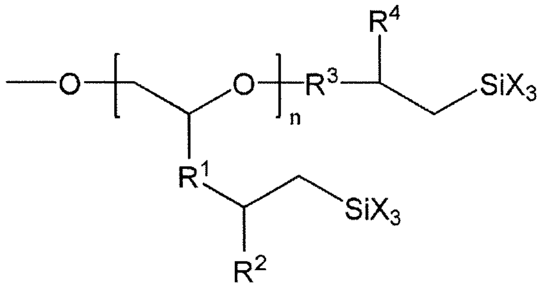

(2)

(where $R^1$ and $R^3$ are each independently a divalent linking group having 1 to 6 carbon atoms, and an atom that binds to each carbon atom adjacent to $R^1$ and $R^3$ is any of carbon, oxygen and nitrogen, $R^2$ and $R^4$ are each independently hydrogen or a hydrocarbon group having 1 to 10 carbon atoms, n is an integer of 1 to 10, and X is a hydroxyl group or a hydrolyzable group).

[10] The multi-pack curable composition according to [9], in which in the general formula (2), $R^1$ is $CH_2OCH_2$, and $R^3$ is $CH_2$.

[11] The multi-pack curable composition according to [9] or [10], in which $R^2$ and $R^4$ in the general formula (2) are hydrogen atoms.

[12] The multi-pack curable composition according to any one of [1] to [11], in which the (meth)acrylate ester polymer (B) has a reactive silicon group equivalent of 0.6 mmol/g or more and 1.0 mmol/g or less.

[13] The multi-pack curable composition according to any one of [1] to [12], in which a Young's modulus at 23°C of a cured product of the curable composition is 20 MPa or more, and an elongation at break at 23°C of the cured product is 80% or more.

[14] The multi-pack curable composition according to any one of [1] to [13], being a two-liquid curable composition consisting of the A agent and the B agent.

[15] A structural adhesive including the multi-pack curable composition according to any one of [1] to [14].

[16] A cured product obtained by curing the multi-pack curable composition according to any one of [1] to [14].

## Advantageous Effects of Invention

According to the present invention, it is possible to provide a curable composition in which a cured product after curing has high strength, high rigidity, and flexibility, and a cured product obtained by curing the curable composition. This makes it possible to provide an adhesive useful as a structural adhesive. According to an embodiment of the present invention, it is possible to provide an adhesive having high adhesive strength.

## Description of Embodiments

The present invention is a multi-pack curable composition including an A agent containing a polyoxyalkylene polymer (A) having a trifunctional reactive silicon group, a (meth)acrylate ester polymer (B) having a trifunctional reactive silicon group, and an epoxy resin curing agent (D) having a tertiary amine, and a B agent containing an epoxy resin (C) and a silanol condensation catalyst (E), in which a weight ratio of the polyoxyalkylene polymer (A):the (meth)acrylate ester polymer (B) is 95:5 to 50:50, a weight ratio of a total of the polyoxyalkylene polymer (A) and the (meth)acrylate ester polymer (B):the epoxy resin (C) is 90:10 to 50:50, and the (meth)acrylate ester polymer (B) contains a polymer containing 40% by weight or more of alkyl (meth)acrylate having 1 to 3 alkyl carbon atoms in a total monomer.

A cured product having high rigidity and flexibility can be obtained with the curable composition having the above configuration.

<<Polyoxyalkylene polymer having reactive silicon group (A)>>

<Reactive silicon group>

The polyoxyalkylene polymer (A) has a trifunctional reactive silicon group represented by the following general formula (1):

$$-SiX_3 \qquad (1)$$

(where X represents a hydroxyl group or a hydrolyzable group.) By using trifunctional reactive silicon as reactive silicon, rigidity of the cured product can be improved.

Examples of X include a hydroxyl group, a halogen, an alkoxy group, an acyloxy group, a ketoximate group, an amino group, an amide group, an acid amide group, an aminooxy group, a mercapto group and an alkenyloxy group. Among them, an alkoxy group such as a methoxy group and an ethoxy group is more preferable, and a methoxy group and an ethoxy group are particularly preferable from the viewpoint of mild hydrolyzability and easy handling.

As the reactive silicon group which the polyoxyalkylene polymer (A) has, specifically, a trimethoxysilyl group, a triethoxysilyl group, a tris (2-propenyloxy) silyl group, or a triacetoxysilyl group is preferable because these have high activity and a cured product having good mechanical properties can be obtained, and a trimethoxysilyl group and a triethoxysilyl group are more preferable because a highly rigid cured product can be obtained.

The polyoxyalkylene polymer (A) may have more than one reactive silicon group on average in one terminal moiety. Having more than one reactive silicon group on average in one terminal moiety means that the polyoxyalkylene polymer (A) contains polyoxyalkylene having two or more reactive silicon groups in one terminal moiety as represented by the following general formula (2). That is, the polyoxyalkylene polymer (A) may contain only polyoxyalkylene having two or more reactive silicon groups in one terminal moiety or may contain both polyoxyalkylene having two or more reactive silicon groups in one terminal moiety and polyoxyalkylene having one reactive silicon group in one tenninal moiety. As a plurality of terminal moieties of one molecule of polyoxyalkylene, there may be both a terminal moiety having two or more reactive silicon groups and a terminal moiety having one reactive silicon group. Furthermore, the polyoxyalkylene polymer (A) as a whole has more than one reactive silicon group on average in one tenninal moiety, but may contain polyoxyalkylene having a terminal moiety having no reactive silicon group.

[CHEM. 1]

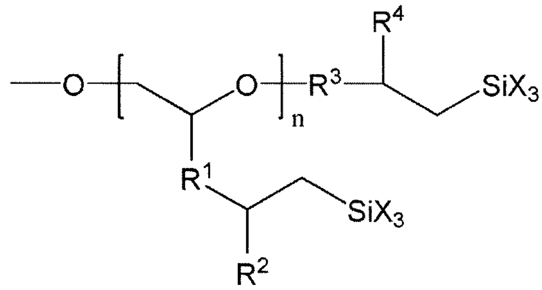

(2)

(where $R^1$ and $R^3$ are each independently a divalent linking group having 1 to 6 carbon atoms, and an atom that binds to each carbon atom adjacent to $R^1$ and $R^3$ is any of carbon, oxygen and nitrogen, $R^2$ and $R^4$ are each independently hydrogen or a hydrocarbon group having 1 to 10 carbon atoms, n is an integer of 1 to 10, and X is a hydroxyl group or a hydrolyzable group.)

$R^1$ and $R^3$ may be a divalent organic group having 1 to 6 carbon atoms or a hydrocarbon group containing an oxygen atom. The number of the carbon atoms in the hydrocarbon group is preferably 1 to 4, more preferably 1 to 3, and still more preferably 1 to 2. Specific examples of $R^1$ include $CH_2OCH_2$, $CH_2O$, and $CH_2$, and $CH_2OCH_2$ is preferable. Specific examples of $R^3$ include $CH_2$ and $CH_2CH_2$, and $CH_2$ is preferable.

The number of the carbon atoms in the hydrocarbon group of $R^2$ and $R^4$ is preferably 1 to 5, more preferably 1 to 3, and still more preferably 1 to 2. Specific examples of $R^2$ and $R^4$ include a hydrogen atom, a methyl group, and an ethyl group, but a hydrogen atom and a methyl group are preferable, and a hydrogen atom is more preferable.

In the terminal moiety represented by the general formula (2), according to a particularly preferred embodiment, $R^1$ is $CH_2OCH_2$, $R^3$ is $CH_2$, and $R^2$ and $R^4$ are hydrogen atoms. n is preferably an integer of 1 to 5, more preferably an integer of 1 to 3, and further preferably 1 or 2. However, n is not limited to one value, and a plurality of values may be mixed.

The polyoxyalkylene polymer (A) preferably has more than 1.0 reactive silicon groups on average in one terminal moiety, and the number of the reactive silicon groups is more preferably 1.1 or more, still more preferably 1.5 or more, and even more preferably 2.0 or more. Also, the number of the reactive silicon groups is preferably 5 or less, and more preferably 3 or less.

The number of the terminal moieties having more than one reactive silicon group contained in one molecule of the polyoxyalkylene polymer (A) is preferably 0.5 or more on average, more preferably 1.0 or more, still more preferably 1.1 or more, and even more preferably 1.5 or more. Also, the number of the terminal moieties is preferably 4 or less, and more preferably 3 or less.

While the polyoxyalkylene polymer (A) may have a reactive silicon group at a position besides the terminal moiety, it preferably has a reactive silicon group only at the terminal moiety because a rubbery cured product showing high elongation and low elastic modulus is easily obtained.

The average number of the reactive silicon groups per molecule of the polyoxyalkylene polymer (A) is preferably more than 1.0, more preferably 1.2 or more, still more preferably 1.3 or more, even more preferably 1.5 or more, and particularly preferably 1.7 or more. The average number of the reactive silicon groups per molecule is preferably 6.0 or less, more preferably 5.5 or less, and most preferably 5.0 or less. If the average number of the reactive silicon groups per molecule is 1.0 or less, a cured product with high strength may not be obtained. If the average number of the reactive silicon groups per molecule exceeds 6.0, a cured product with high elongation may not be obtained.

<Main chain structure>

The main chain skeleton of the polyoxyalkylene polymer (A) is not particularly limited, and examples thereof include polyoxyethylene, polyoxypropylene, polyoxybutylene, polyoxytetramethylene, polyoxyethylene-polyoxypropylene copolymer, polyoxypropylene-polyoxybutylene copolymer and the like. Among them, polyoxypropylene is preferable.

The number average molecular weight of the polyoxyalkylene polymer (A) is 3,000 to 100,000, more preferably 3,000 to 50,000 and particularly preferably 3,000 to 30,000, based on polystyrene molecular weight by GPC. When the number average molecular weight is less than 3,000, the amount of the reactive silicon group introduced increases, which may be inconvenient in terms of production cost, and when the number average molecular weight exceeds 100,000, it tends to cause disadvantages in terms of workability due to high viscosity.

The molecular weight of the polyoxyalkylene polymer (A) can also be shown by a terminal group-based molecular weight, which is obtained by directly measuring the terminal group concentration of an organic polymer precursor before introduction of a reactive silicon group by a method of measuring hydroxyl value according to JIS K 1557 and titration

analysis based on the principle of the measurement method of iodine value as defined in JIS K 0070, and determining in consideration of the structure of the organic polymer (degree of branching as determined by the polymerization initiator used). The terminal group-based molecular weight of the polyoxyalkylene polymer (A) can be determined by preparing a calibration curve of number average molecular weight of the organic polymer precursor obtained by general GPC measurement and the terminal group-based molecular weight, and converting the number average molecular weight of the polyoxyalkylene polymer (A) obtained by the GPC measurement into a terminal group-based molecular weight.

While the molecular weight distribution (Mw/Mn) of the polyoxyalkylene polymer (A) is not particularly limited, it is preferably narrow, and preferably less than 2.0, more preferably 1.6 or less, still more preferably 1.5 or less, and particularly preferably 1.4 or less. The molecular weight distribution of the polyoxyalkylene polymer (A) can be determined from the number average molecular weight and the weight average molecular weight obtained by GPC measurement.

The main chain structure of the polyoxyalkylene polymer (A) of the present invention may be linear or branched.

<Method of synthesizing polyoxyalkylene polymer (A)>

Next, a method of synthesizing the polyoxyalkylene polymer (A) will be described.

The polyoxyalkylene polymer (A) having more than 1.0 reactive silicon groups on average in one terminal moiety is preferably obtained by introducing two or more carbon-carbon unsaturated bonds into one terminal of a hydroxyl group-terminated polymer obtained by polymerization and then reacting same with a reactive silicon group-containing compound which reacts with the carbon-carbon unsaturated bonds. The above-mentioned preferable synthesis method will be described below.

(Polymerization)

For the polyoxyalkylene polymer (A), a method including polymerizing an epoxy compound with an initiator having a hydroxyl group by using a double-metal cyanide complex catalyst such as a zinc hexacyanocobaltate glyme complex is preferable.

Examples of the initiator having a hydroxyl group include those having one or more hydroxyl groups, such as ethylene glycol, propylene glycol, glycerol, pentaerythritol, low molecular weight polypropylene glycol, polyoxypropylene triol, allyl alcohol, polypropylene monoallyl ether, polypropylene monoalkyl ether and the like.

Examples of the epoxy compound include alkylene oxides such as ethylene oxide, propylene oxide and the like, glycidyl ethers such as methyl glycidyl ether, allyl glycidyl ether and the like, and the like. Among them, propylene oxide is preferable.

(Introduction of carbon-carbon unsaturated bond)

As a method for introducing two or more carbon-carbon unsaturated bonds into one terminal, a method including allowing an action of an alkali metal salt on a hydroxyl group-terminated polymer, and first performing a reaction with an epoxy compound having a carbon-carbon unsaturated bond, and then a reaction with a halogenated hydrocarbon compound having a carbon-carbon unsaturated bond is preferable. By using this method, introduction of a reactive group can be performed more efficiently and stably while controlling the molecular weight and molecular weight distribution of the polymer main chain according to the polymerization conditions.

As the alkali metal salt to be used in the present invention, sodium hydroxide, sodium methoxide, sodium ethoxide, potassium hydroxide, potassium methoxide, and potassium ethoxide are preferable, and sodium methoxide and potassium methoxide are more preferable. Sodium methoxide is particularly preferable in terms of availability.

As the temperature of the action of the alkali metal salt, 50°C or higher and 150°C or lower is preferable, and 110°C or higher and 140°C or lower is more preferable. The duration of the action of the alkali metal salt is preferably 10 minutes or more and 5 hours or less, and more preferably 30 minutes or more and 3 hours or less.

As the epoxy compound having a carbon-carbon unsaturated bond to be used in the present invention, a compound represented by the following formula (3):

[CHEM. 2]

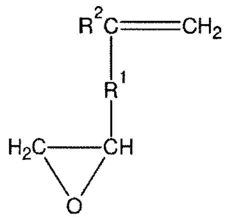

(3)

(where $R^1$ and $R^2$ are as defined above.) can be preferably used. Specifically, allyl glycidyl ether, methallyl glycidyl ether, glycidyl acrylate, glycidyl methacrylate, butadiene monooxide, and 1,4-cyclopentadiene monoepoxide are preferable from the aspect of reaction activity, and allyl glycidyl ether is particularly preferable.

As the amount of the epoxy compound having a carbon-carbon unsaturated bond to be used in the present invention, any amount can be used in consideration of the amount and reactivity of the carbon-carbon unsaturated bond to be introduced into the polymer. Particularly, the molar ratio of the epoxy compound to the hydroxyl group contained in the hydroxyl group-terminated polymer is preferably 0.2 or more, and more preferably 0.5 or more. Also, the molar ratio is preferably 5.0 or less, and more preferably 2.0 or less.

In the present invention, the reaction temperature of the ring opening addition reaction of an epoxy compound having a carbon-carbon unsaturated bond to a polymer containing a hydroxyl group is preferably 60°C or higher and 150°C or lower, and more preferably 110°C or higher and 140°C or lower.

Examples of the halogenated hydrocarbon compound having a carbon-carbon unsaturated bond to be used in the present invention include vinyl chloride, allyl chloride, methallyl chloride, vinyl bromide, allyl bromide, methallyl bromide, vinyl iodide, allyl iodide, methallyl iodide and the like, and allyl chloride or methallyl chloride are more preferably used since they are easy to handle.

The addition amount of the above-described halogenated hydrocarbon compound having a carbon-carbon unsaturated bond, is not particularly limited, and the molar ratio of the compound to hydroxyl groups contained in the hydroxyl group-terminated polymer is preferably 0.7 or more, and more preferably 1.0 or more. Also, the molar ratio is preferably 5.0 or less, and more preferably 2.0 or less.

The temperature when the halogenated hydrocarbon compound having a carbon-carbon unsaturated bond is caused to react is preferably 50°C or higher and 150°C or lower, and more preferably 110°C or higher and 140°C or lower. The reaction time is preferably 10 minutes or more and 5 hours or less, and more preferably 30 minutes or more and 3 hours or less.

(Introduction of reactive silicon group)

The introduction method of a reactive silicon group is not particularly limited, and a known method can be utilized. Examples of the introduction method are as follows:

(i) A method of adding a hydrosilane compound to a polymer having a carbon-carbon unsaturated bond through hydrosilylation reaction.

(ii) A method of reacting a polymer having a carbon-carbon unsaturated bond, with a compound having both a group capable of forming a bond by reacting with a carbon-carbon unsaturated bond and a reactive silicon group (also called a silane coupling agent). Examples of the group capable of forming a bond by reacting with a carbon-carbon unsaturated bond include, but are not limited to, a mercapto group and the like.

The method (i) is preferable because the reaction is simple and adjustment of the amount of the reactive silicon group to be introduced and the physical properties of the resulting reactive silicon group-containing polyoxyalkylene polymer (A) are stable. The method (ii) is preferable because it has many choices of reaction and can easily increase the introduction rate of the reactive silicon group.

The hydrosilane compound that can be used in the method (i) is not particularly limited, and examples thereof include trimethoxysilane, triethoxysilane, tris (2-propenyloxy) silane, and triacetoxysilane.

About the use amount of the hydrosilane compound, the molar ratio of the compound to a carbon-carbon unsaturated bond in a polymer that is a precursor (the molar number of the hydrosilane/the molar number of the carbon-carbon unsaturated bond) is preferably from 0.05 to 10 from the viewpoint of reactivity, and is more preferably from 0.3 to 2 from the viewpoint of economic efficiency.

The hydrosilylation reaction is accelerated by various catalysts. As the catalysts for hydrosilylation, known

catalysts, such as various complexes each including cobalt, nickel, iridium, platinum, palladium, rhodium, ruthenium, or some other element, may be used. For example, the following are usable: a catalyst in which platinum is carried on a carrier made of alumina, silica or carbon black, and platinic chloride; a platinic chloride complex composed of platinic chloride and, e.g., an alcohol, aldehyde or ketone; a platinum-olefin complex [such as $Pt(CH_2=CH_2)_2(PPh_3)$, or $Pt(CH_2=CH_2)_2Cl_2$]; a platinum-vinylsiloxane complex [$Pt\{(vinyl)Me_2SiOSiMe_2(vinyl)\}$ or $Pt\{Me(vinyl)SiO\}_4$]; a platinum-phosphine complex [$Ph(PPh_3)_4$, or $Pt(PBu_3)_4$]; and a platinum-phosphite complex [$Pt\{P(OPh)_3\}_4$]. It is preferred from the viewpoint of reaction efficiency to use a platinum catalyst such as platinic chloride, or a platinum vinylsiloxane complex.

<<Reactive silicon group-containing (meth)acrylate ester polymer (B)>>

The (meth)acrylate ester monomer constituting the main chain of the reactive silicon group-containing (meth)acrylate ester polymer (B) (also referred to as "(meth)acrylate ester polymer B") is not particularly limited, and various monomers may be used. Specific examples thereof include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, (3-trimethoxysilyl)propyl (meth)acrylate, (3-dimethoxymethylsilyl)propyl (meth)acrylate, (2-trimethoxysilyl)ethyl (meth)acrylate, (2-dimethoxymethylsilyl)ethyl (meth)acrylate, trimethoxysilylmethyl (meth)acrylate, (dimethoxymethylsilyl)methyl (meth)acrylate, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl methacrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth)acrylate, and other (meth)acrylate monomers.

Examples of the monomer unit other than the above-mentioned monomers include acrylic acids such as acrylic acid and methacrylic acid; and monomers each containing an amide group, such as N-methylolacrylamide and N-methylolmethacrylamide, monomers each containing an epoxy group, such as glycidyl acrylate and glycidyl methacrylate, and monomers each containing a nitrogen-containing group, such as diethylaminoethyl acrylate and diethylaminoethyl methacrylate.

As the (meth)acrylate ester polymer (B), a polymer obtained by copolymerizing a (meth)acrylate ester monomer with a vinyl monomer copolymerizable with this monomer may be used. The vinyl monomer is not particularly limited, and examples thereof include styrene monomers, such as styrene, vinyltoluene, $\alpha$-methylstyrene, chlorostyrene, styrenesulfonic acid, and salts thereof; fluorine-containing vinyl monomers such as perfluoroethylene, perfluoropropylene, and vinylidene fluoride; silicon-containing vinyl monomers such as vinyltrimethoxysilane and vinyltriethoxysilane; maleic anhydride, maleic acid, and monoalkyl esters and dialkyl esters of maleic acid; fumaric acid, and monoalkyl esters and dialkyl esters of fumaric acid; maleimide monomers such as maleimide, methylmaleimide, ethylmaleimide, propylmaleimide, butylmaleimide, hexylmaleimide, octylaleimide, dodecylmaleimide, stearylmaleimide, phenylmaleimide, and cyclohexylmaleimide; nitrile-group-containing vinyl monomers such as acrylonitrile and methacrylonitrile; amide-group-containing vinyl monomers such as acrylamide and methacrylamide; vinyl ester monomers such as vinyl acetate, vinyl propionate, vinyl pivalate, vinyl benzoate, and vinyl cinnamate; alkenyl monomers such as ethylene and propylene; conjugated diene monomers such as butadiene and isoprene; and vinyl chloride, vinylidene chloride, ally chloride, and allyl alcohol. Two or more of these monomers are also usable as copolymerizable components.

Out of (meth)acrylate ester polymers obtained from these monomers, copolymers each made from a styrene monomer and a (meth)acrylate ester polymer are preferable because the copolymers are excellent in physical properties. More preferred are (meth)acrylate ester polymers each made from an acrylate ester monomer and a methacrylate ester monomer. Particularly preferred are acrylate ester polymers each made from an acrylate ester monomer.

The (meth)acrylate ester polymer (B) has a reactive silicon group represented by the general formula (1) shown above. As the reactive silicon group which the (meth)acrylate ester polymer (B) has, the reactive silicon groups as described above for the polyoxyalkylene polymer (A) can be used. Among them, a trimethoxysilyl group and a triethoxysilyl group are more preferable because a highly rigid cured product can be obtained.

The reactive silicon group equivalent of the (meth)acrylate ester polymer (B) is not particularly limited, and is preferably 0.2 mmol/g or more, more preferably 0.5 mmol/g or more, and still more preferably 0.6 mmol/g or more. The reactive silicon group equivalent is preferably 2.0 mmol/g or less, and more preferably 1.0 mmol/g or less from the viewpoint of suppressing a decrease in elongation of a cured product. In order to obtain a highly rigid cured product, the reactive silicon group equivalent is particularly preferably 0.6 mmol/g or more and 1.0 mmol/g or less.

The method for introducing a reactive silicon group into a (meth)acrylate ester polymer is not particularly limited, and may be, for example, methods described below. (iv) A method of copolymerizing a compound having a polymerizable

unsaturated group and a reactive-silicon-containing group with the above-described monomer; the use of this method produces a tendency that reactive silicon groups are introduced at random into the main chain of the polymer. (v) A method of using a mercaptosilane compound having a reactive-silicon-containing group as a chain transfer agent to polymerize a (meth)acrylate ester polymer; the use of this method makes it possible to introduce the reactive silicon group at a terminal of the polymer. (vi) A method of copolymerizing a compound having a polymerizable unsaturated group and a reactive functional group (V group), and then causing the resultant to react with a compound having the reactive silicon group and a functional group reactive with the V group; specific examples of this method include a method of copolymerizing 2-hydroxyethyl acrylate, and then causing the resultant to react with an isocyanatosilane having a reactive-silicon-containing group, and a method of copolymerizing glycidyl acrylate, and then causing the resultant to react with an aminosilane compound having a reactive-silicon-containing group. (vii) A method of modifying a terminated functional group of a (meth)acrylate ester polymer synthesized by living radical polymerization to introduce a reactive silicon group thereinto. About the (meth)acrylate ester polymer obtained by living radical polymerization, a functional group is easily introduced into a terminal of the polymer. By modifying this functional group, a reactive silicon group can be introduced into the polymer terminal.

Examples of the silicon compound usable to introduce the reactive silicon group(s) of the (meth)acrylate ester polymer (B) by use of the above-mentioned methods are described hereinafter. Examples of the compound used in the method (iv), which has a polymerizable unsaturated group and a reactive silicon group, include 3-(trimethoxysilyl)propyl (meth)acrylate, 3-(triethoxysilyl)propyl (meth)acrylate, (trimethoxysilyl)methyl (meth)acrylate, (triethoxysilyl)methyl (meth)acrylate, and the like. 3-(trimethoxysilyl)propyl (meth)acrylate is particularly preferred.

Examples of the mercaptosilane compound used in the method (v), which has a reactive-silicon-containing group, include 3-mercaptopropyltrimethoxysilane, (mercaptomethyl) trimethoxysilane, and the like.

Examples of the compound used in the method (vi), which has the reactive silicon group and the functional group reactive with the V group, include isocyanatesilane compounds such as 3-isocyanatopropyltrimethoxysilane, 3-isocyanatepropyltriethoxysilane, isocyanatemethyltrimethoxysilane, and isocyanatemethyltriethoxysilane; epoxysilane compounds such as 3-glycidoxypropyltrimethoxysilane, 3-glycidoxypropyltriethoxysilane, glycidoxymethyltrimethoxysilane, and glycidoxymethyltriethoxysilane; and aminosilane compounds such as 3-aminopropyltrimethoxysilane, 3 -aminopropyltriethoxysilane, aminomethyltrimethoxysilane, aminomethyltriethoxysilane, N-cyclohexylaminomethyltrimethoxysilane, and N-cyclohexylaminomethyltriethoxysilane; and the like.

In the method (vii), any modifying reaction is usable. For example, the following method is usable therefor: a method of using a compound having a functional group reactive with the terminated reactive group obtained by polymerization, and a silicon group; or a method of using a compound having a functional group reactive with the terminated reactive group, and a double bond to introduce a double bond into a terminal of the polymer, and then introducing a reactive silicon group into this double bond through hydrosilylation or some other reaction.

These methods may be combined with each other at will. In the case of combining, for example, the methods (vi) and (v) with each other, the (meth)acrylate ester polymer (B) having one or more reactive silicon groups at a molecular chain terminal and/or a side chain thereof can be obtained.

The (meth)acrylate ester polymer (B) preferably contains a polymer containing 40% by weight or more of alkyl (meth)acrylate having 1 to 3 alkyl carbon atoms in the total monomer because high rigidity can be achieved. Although the (meth)acrylate ester polymer (B) may contain only the polymer containing 40% by weight or more of alkyl (meth)acrylate having 1 to 3 alkyl carbon atoms in the total monomer, it is preferable that the (meth)acrylate ester polymer (B) contains, together with this polymer, a polymer containing 40% by weight or more of alkyl (meth)acrylate having 4 to 30 alkyl carbon atoms in the total monomer and is obtained by adding both the polymers because the rigidity, elongation, and strength are improved.

Also when the (meth)acrylate ester polymer (B) contains a copolymer containing 40% by weight or more of alkyl (meth)acrylate having 1 to 3 alkyl carbon atoms in the total monomer and 40% by weight or more of alkyl (meth)acrylate having 4 to 30 alkyl carbon atoms in the total monomer, it is preferable because the rigidity, elongation, and strength are improved.

The monomer composition of the (meth)acrylate ester polymer (B) can be selected in accordance with the usage and purpose. For a usage about which strength is required, the glass transition temperature (Tg) is preferably relatively high, and the temperature Tg is preferably 0°C or higher and 200°C or lower, and more preferably 20°C or higher and 100°C or lower. The temperature Tg is gained by Fox's equation described below.

Fox's Equation:

$$1/(Tg(K))=\Sigma(Mi/Tgi)$$

(where Mi represents the proportion by weight of a monomer component "i" which is a constituent element of a polymer, and Tgi represents the glass transition temperature (K) of a homopolymer made from the monomer "i".).

The number average molecular weight of the (meth)acrylate ester polymer (B) is not particularly limited, and is preferably from 500 to 50,000, more preferably from 500 to 30,000, in particular preferably from 1,000 to 10,000 in terms of that of polystyrene through GPC measurement.

Methods for blending the (meth)acrylate ester polymer (B) with the polyoxyalkylene polymer (A) are suggested in JP Nos. S59-122541 A, S63-112642 A, H06-172631 A, H11-116763 A and others. A different method is also usable in which a (meth)acrylate ester monomer is polymerized in the presence of a polyoxypropylene polymer having a reactive silicon group.

A weight ratio (A):(B) of the polyoxyalkylene polymer (A):the (meth)acrylate ester polymer (B) is 95:5 to 50:50. When the weight ratio (A):(B) is within this range, a cured product having flexibility and high shear adhesive strength can be obtained. Furthermore, from the viewpoint of achieving both high rigidity and flexibility, the weight ratio (A):(B) is preferably 80:20 to 50:50, and more preferably 70:30 to 50:50.

<<Epoxy resin (C)>>

Examples of the epoxy resin (C) include flame retardant epoxy resins such as epichlorohydrin-bisphenol A type epoxy resin, epichlorohydrin-bisphenol F type epoxy resin and glycidyl ether of tetrabromobisphenol A, novolak type epoxy resin, hydrogenated bisphenol A type epoxy resin, glycidyl ether type epoxy resin of a bisphenol A propylene oxide adduct, p-oxybenzoic acid glycidyl ether ester type epoxy resin, m-aminophenolic epoxy resin, diaminodiphenylmethane type epoxy resin, urethane-modified epoxy resin, various alicyclic epoxy resins, N,N-diglycidylaniline, N,N-diglycidyl-o-toluidine, triglycidyl isocyanurate, glycidyl ethers of a polyhydric alcohol, such as polyalkylene glycol diglycidyl ether and glycerin, hydantoin type epoxy resin, and an epoxidized product of any unsaturated polymer such as petroleum resin. However, the epoxy resin is not limited to these resins, and may be an ordinarily used epoxy resin. An epoxy resin having, in the molecule thereof, at least two epoxy groups is preferable because the resin is highly reactive when cured, and further the cured product easily forms therein a three-dimensional network structure. More preferred is any bisphenol A type epoxy resin or novolak type epoxy resin.

For the use amount of the epoxy resin (C), it is preferable to use the epoxy resin (C) such that a weight ratio [(A + B):(C)] of a total of the polyoxyalkylene polymer (A) and the (meth)acrylate ester polymer (B) to the epoxy resin (C) is 90:10 to 50:50. When the ratio of (A + B) is more than 90%, the strength is lowered, and when the ratio is less than 50%, the flexibility is lowered and hardness increases too much. The weight ratio [(A + B):(C)] is more preferably 80:20 to 60:40 in terms of a balance between flexibility and strength.

The Young's modulus is an index showing the rigidity, and control of the Young's modulus shown by a cured product obtained by curing the curable composition of the present invention can be arbitrarily adjusted by the weight ratio of the polyoxyalkylene polymer (A), the (meth)acrylate ester polymer (B), and the epoxy resin (C) specified by the present invention. For example, in order to prepare a cured product whose Young's modulus measured at 23°C is less than 100 MPa, the weight ratio (A):(B) is preferably set to 95:5 to 60:40, and the weight ratio (A + B):(C) is preferably set to 90:10 to 60:40.

In order to prepare a cured product whose Young's modulus measured at 23°C is 100 MPa or more, the weight ratio (A):(B) is preferably set to 80:20 to 50:50, and the weight ratio (A + B):(C) is preferably set to 80:20 to 50:50.

«Epoxy resin curing agent (D) having tertiary amine»

An epoxy resin curing agent having a tertiary amine is used as the epoxy resin curing agent (D) for curing the epoxy resin (C). By using the epoxy resin curing agent (D) having a tertiary amine, a cured product having high rigidity, high strength and high elongation can be obtained.

As the epoxy resin curing agent (D) having a tertiary amine, any compound having a tertiary amine can be used. Specific examples thereof include N,N,N',N'-tetramethyl-1,3-diminopropane, N,N,N',N'-tetramethyl-1,6-diminohexane, N,N-dimethyl benzylamine, N-methyl-N-(dimethylaminopropyl)aminoethanol, 2,4,6-tris(dimethylaminomethyl)phenol, tripropylamine, DBU, DBN, and salts of these tertiary amines. However, the epoxy resin is not limited to these compounds. Two or more kinds of these compounds may be used in combination, and a known epoxy resin curing agent other than the component (D) may be further added.

The epoxy resin curing agent (D) having a tertiary amine is preferably an aromatic amine, and more preferably, the epoxy resin curing agent (D) has three or more amino groups. Specifically, 2,4,6-tris(dimethylaminomethyl)phenol can be exemplified.

The use amount of the epoxy resin curing agent (D) is preferably from 0.1 to 50 parts by weight, more preferably from 0.1 to 20 parts by weight, and still more preferably from 0.5 to 10 parts by weight for 100 parts by weight of the epoxy resin (C).

<<Silanol condensation catalyst (E)>>

In the present invention, a silanol condensation catalyst (E) is used to promote condensation reactions of the reactive silicon groups of the polyoxyalkylene polymer (A) and the (meth)acrylate ester polymer (B) to extend the chain of the polymer or crosslink the polymer.

Examples of the silanol condensation catalyst (E) include organic tin compounds, carboxylic acid metal salts, amine compounds, carboxylic acids, alkoxy metals, and the like.

Specific examples of the organic tin compound include dibutyltin dilaurate, dibutyltin dioctanoate, dibutyltin bis (butyl maleate), dibutyltin diacetate, dibutyltin oxide, dibutyltin bis (acetylacetonate), dioctyltin bis(acetylacetonate), dioctyltin dilaurate, dioctyltin distearate, dioctyltin diacetate, dioctyltin oxide, a reaction product of dibutyltin oxide and a silicate compound, a reaction product of dioctyltin oxide and a silicate compound, a reaction product of dibutyltin oxide and phthalate ester, and the like.

Specific examples of the metal carboxylate include tin carboxylates, bismuth carboxylates, titanium carboxylates, zirconium carboxylates, iron carboxylates, and the like. As the metal carboxylate, the following carboxylic acids and various metals can be combined.

Specific examples of the amine compound include amines such as octylamine, 2-ethylhexylamine, laurylamine and stearylamine; nitrogen-containing heterocyclic compounds such as pyridine, 1,8-diazabicyclo[5,4,0]undecene-7 (DBU), and 1,5-diazabicyclo[4,3,0]nonene-5 (DBN); guanidines such as guanidine, phenylguanidine, and diphenylguanidine; biguanides such as butyl biguanide, 1-o-tolyl biguanide and 1-phenyl biguanide; amino group-containing silane coupling agents; ketimine compounds and the like.

Specific examples of the carboxylic acid include acetic acid, propionic acid, butyric acid, 2-ethylhexanoic acid, lauric acid, stearic acid, oleic acid, linoleic acid, neodeconoic acid, versatic acid, and the like.

Specific examples of the alkoxy metal include titanium compounds such as tetrabutyl titanate titanium tetrakis(acetylacetonate), and diisopropoxytitanium bis(ethylacetoacetate); aluminum compounds such as aluminum tris(acetylacetonate), and diisopropoxyaluminum ethylacetoacetate; and zirconium compounds such as zirconium tetrakis(acetylacetonate); and the like.

The use amount of the silanol condensation catalyst (E) is preferably from 0.001 to 20 parts by weight, more preferably from 0.01 to 15 parts by weight, and particularly preferably 0.01 to 10 parts by weight for 100 parts by weight of the polyoxyalkylene polymer (A) and the (meth)acrylate ester polymer (B).

«Water (F)»

Water (F) may be added to the B agent of the composition of the present invention. By adding water, curing of the polyoxyalkylene polymer (A) and the (meth)acrylate ester polymer (B) is promoted when an A agent and a B agent are mixed.

The amount of the water (F) added is preferably from 0.1 to 10 parts by weight, more preferably from 0.1 to 5 parts by weight, and still more preferably 0.1 to 2 parts by weight for 100 parts by weight of the polyoxyalkylene polymer (A) and the (meth)acrylate ester polymer (B). The composition of the present invention may contain a C agent containing the water (F) in addition to the A agent and the B agent. In this case, the composition of the present invention is of a three-liquid type.

«Other additives»

The composition of the present invention may contain, besides the polyoxyalkylene polymer (A), the (meth)acrylate ester polymer (B), the epoxy resin (C), the epoxy resin curing agent (D), the silanol condensation catalyst (E) and the water (F), filler, adhesion-imparting agent, drip inhibitor, antioxidant, light stabilizer, ultraviolet absorber, tackifier resin, and other resin as additives. Various additives may be optionally added to the curable composition of the present invention to adjust various physical properties of the curable composition or the cured product. Examples of such additives include plasticizers, solvents, diluents, photocurable substances, oxygen-curable substances, surface modifiers, silicates, curability adjusting agents, radical inhibitors, metal deactivators, ozone-degradation inhibitors, phosphorus peroxide decomposers, lubricants, pigments, fungicides, flame retardants, foaming agents, and the like.

<Filler>

Various fillers may be blended into the composition of the present invention. Examples of the filler include ground calcium carbonate, colloidal calcium carbonate, magnesium carbonate, diatomite, clay, talc, titanium oxide, fumed silica, precipitated silica, crystalline silica, fused silica, silicic anhydride, hydrous silicic acid, alumina, carbon black, ferric oxide, fine aluminum powder, zinc oxide, activated zinc white, PVC powder, PMMA powder, glass fiber,

filament, and the like. It is more preferable to use fumed silica because it can efficiently impart thixotropy.

The use amount of the filler is preferably from 1 to 300 parts by weight, in particular preferably from 10 to 250 parts by weight for 100 parts by weight of the polyoxyalkylene polymer (A) and the (meth)acrylate ester polymer (B).

Organic balloons and inorganic balloons may be used in order to reduce the weight (the specific gravity) of the composition.

<Adhesion-imparting agent>

An adhesion-imparting agent can be added to the composition of the present invention.

As the adhesion-imparting agent, a silane coupling agent or a reaction product of a silane coupling agent can be added.

Specific examples of the silane coupling agent include amino group-containing silanes such as γ-aminopropyltrimethoxysilane, y-aminopropylmethyldimethoxysilane, N-β-aminoethyl-γ-aminopropyltrimethoxysilane, N-β-aminoefhyl-γ- aminopropylmethyldimethoxysilane, N-phenyl-γ-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanatemethyltrimethoxysilane, and α-isocyanatomethyldimethoxymethylsilane; mercapto-group containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane, and β-(3,4-epoxycyclohexyl)ethyltrimethoxysilane.

The adhesion-imparting agent may be used alone, or two or more kinds thereof may be used, concurrently. In addition, a reaction product of various silane coupling agents can also be used.

The use amount of the silane coupling agent is preferably from 0.1 to 20 parts by weight, in particular preferably from 0.5 to 10 parts by weight for 100 parts by weight of the polyoxyalkylene polymer (A) and the (meth)acrylate ester polymer (B).

<Drip inhibitor>

A drip inhibitor may be optionally added to the composition of the present invention to prevent the composition from dripping to make the workability thereof good. The drip inhibitor is not particularly limited, and examples thereof include polyamide waxes; hydrogenated castor oil derivatives; and metal soaps such as calcium stearate, aluminum stearate, and barium stearate. These drip inhibitors may be used alone or in combination with two or more of them.

The use amount of the drip inhibitor is preferably from 0.1 to 20 parts by weight for 100 parts by weight of the total of the polyoxyalkylene polymer (A) and the (meth)acrylate ester polymer (B).

<Antioxidant>

An antioxidant (anti-ageing agent) is usable in the composition of the present invention. The use of the antioxidant makes it possible to heighten the cured product in weather resistance. Examples of the antioxidant include hindered phenolic, monophenolic, bisphenolic, and polyphenolic antioxidants. Specific examples of the antioxidant are also described in JP Nos. H04-283259 A and H09-194731 A.

The use amount of the antioxidant is preferably from 0.1 to 10 parts by weight, in particular preferably from 0.2 to 5 parts by weight for 100 parts by weight of the polyoxyalkylene polymer (A) and the (meth)acrylate ester polymer (B).

<Light stabilizer>

A light stabilizer is usable in the composition of the present invention. The use of the light stabilizer makes it possible to prevent the cured product from being deteriorated by optical oxidization. Examples of the light stabilizer include benzotriazole, hindered amine, and benzoate compounds. The hindered amine compounds are particularly preferable.

The use amount of the light stabilizer is preferably from 0.1 to 10 parts by weight, in particular preferably from 0.2 to 5 parts by weight for 100 parts by weight of the polyoxyalkylene polymer (A) and the (meth)acrylate ester polymer (B).

<Ultraviolet absorber>

An ultraviolet absorber is usable in the composition of the present invention. The use of the ultraviolet absorbent makes it possible to heighten the cured product in surface weather resistance. Examples of the ultraviolet absorbent include benzophenone, benzotriazole, salicylate, substituted tolyl, and metal chelate compounds. The benzotriazole compounds are particularly preferable, and examples thereof include TINUVIN P, TINUVIN 213, TINUVIN 234, TINUVIN

326, TINUVIN 327, TINUVIN 328, TINUVIN 329, and TINUVIN 571 (each manufactured by BASF).

The use amount of the ultraviolet absorbent is preferably from 0.1 to 10 parts by weight, in particular preferably from 0.2 to 5 parts by weight for 100 parts by weight of the polyoxyalkylene polymer (A) and the (meth)acrylate ester polymer (B).

<Tackifier resin>

In the composition of the present invention, a tackifier resin can be added to enhance adhesiveness and close adhesiveness to a base material or according to other needs. The tackifier resin is not particularly limited, and may be an ordinarily used tackifier resin.

Specific examples of the tackifier resin include terpene-based resin, aromatic modified terpene resin, hydrogenated terpene resin, terpene-phenol resin, phenol resin, modified phenol resin, xylene-phenol resin, cyclopentadiene-phenol resin, coumaroneinden resin, rosin resin, rosin ester resin, hydrogenated rosin ester resin, xylene resin, low-molecular weight polystyrene-based resin, styrene copolymer resin, styrene block copolymer and a hydrogenated product thereof, petroleum resin (e.g., C5 hydrocarbon resin, C9 hydrocarbon resin, C5C9 hydrocarbon copolymer resin etc.), hydrogenated petroleum resin, DCPD resin and the like. These resins may be used alone or in combination with two or more of them.

The use amount of the tackifier resin is preferably from 2 to 100 parts by weight, more preferably from 5 to 50 parts by weight, and still more preferably from 5 to 30 parts by weight for 100 parts by weight of the polyoxyalkylene polymer (A) and the (meth)acrylate ester polymer (B). If the amount is less than 2 parts by weight, the composition does not easily gain a bonding or adhesive effect onto a base material. If the amount is more than 100 parts by weight, the composition is excessively high in viscosity to be difficult to handle.

«Preparation of curable composition»

The curable composition of the present invention is preferably prepared as a two-component type to be used by adding, as the A agent, the polyoxyalkylene polymer (A), the acrylate ester polymer (B), the epoxy curing agent (D), and other additives and adding, as the B agent, the epoxy resin (C), the silanol condensation catalyst (E), and other additives to mix the A agent and the B agent before use. In addition, water may be added to the B agent in order to accelerate curability of the polyoxyalkylene polymer (A) and the acrylate ester polymer (B).

The curable composition of the present invention may be cured at room temperature or by heating. When dissimilar materials are bonded with an adhesive, particularly when heating and curing are performed, thermal strain due to a difference in linear expansion coefficient between the dissimilar materials may be a problem. Usually, a reaction-curable adhesive such as an epoxy-based composition or a urethane-based composition having high rigidity gives high adhesive strength when heated and cured, and, at the same time, its flexibility may be greatly reduced to cause thermal strain during cooling. On the other hand, the curable composition of the present invention has flexibility even when heated and cured to such an extent that high adhesive strength can be obtained, can suppress the occurrence of thermal strain, and further also has high rigidity.

In the cured product obtained by curing the curable composition of the present invention, from the viewpoint of achieving both high rigidity and flexibility, the Young's modulus at 23°C is preferably 20 MPa or more, more preferably 100 MPa or more, and still more preferably 200 MPa or more. An elongation at break at 23°C is preferably 70% or more, and more preferably 80% or more. The Young's modulus and the elongation at break are measured by the method described in the section of Examples.

«Surface treatment of adherend»

The curable composition of the present invention can exhibit good adhesiveness to various adherends such as plastics, metals and composite materials. When the curable composition is used as an adhesive for non-polar materials such as polypropylene and engineering plastics having a rigid molecular chain such as polyphenylene sulfide, in order to increase adhesiveness to these adherends and obtain stable adhesive strength, the adherend can be surface-treated in advance by a known method. For example, surface treatment techniques such as sanding treatment, flame treatment, corona discharge, arc discharge, and plasma treatment can be used. The plasma treatment is preferable because the adherend is less damaged and stable adhesiveness can be obtained. These surface treatments are also effective for removing a release agent used during formation and remaining on a surface of the adherend.

«Use applications»

The composition of the present invention is suitable for being used as an adhesive composition, and is usable

for a sealing material for buildings, ships, automobiles, roads and others, an adhesive, a sticker, a waterproof material, and others. The cured product obtained by curing the curable composition of the present invention has flexibility even though it has high rigidity, and is more preferably used as an adhesive, particularly as a structural adhesive, among the above applications. In particular, when dissimilar materials such as aluminum-steel and aluminum-composite materials are bonded, thermal strain occurs due to temperature changes because the linear expansion coefficients of the two are different. In such a case, an adhesive having a high elongation is preferable in order to cope with thermal deformation, and thus the curable composition of the present invention can be suitably used for bonding the dissimilar materials. When dissimilar materials are bonded, it is preferable to cover a bonding portion with a sealer in order to prevent corrosion. As the sealer, it is possible to use a polymer having a reactive silicon group as shown in the present application. As use applications of the curable composition of the present invention, the curable composition is preferably used as an adhesive used in automobile parts such as vehicle panels, parts of large vehicles such as trucks and buses, train car parts, aircraft parts, ship parts, electrical machinery parts, and various mechanical parts, and others.

**[Examples]**

Hereinafter, the present invention will be specifically described with reference to examples, but the examples do not limit the present invention.

The number average molecular weight in the examples is a GPC molecular weight measured under the following conditions.

Liquid sensing system: HLC-8120GPC, manufactured by Tosoh Corporation
Column: TSK-GEL H type manufactured by Tosoh Corporation
Solvent: THF
Molecular weight: polystyrene equivalent
Measurement temperature: 40°C

The terminal group-based molecular weight in the examples is a molecular weight obtained by determining the hydroxyl value by the measurement method of JIS K 1557 and the iodine value by the measurement method of JIS K 0070, and determining in consideration of a structure of an organic polymer (branching degree determined by the polymerization initiator used).

The average number of introduced carbon-carbon unsaturated bonds into a polymer (Q) in each of the examples per terminal of the polymer (Q) is calculated in accordance with the following calculation equation:

(average introduction number)=[unsaturated group concentration (mol/g) of polymer (Q) as determined from iodine value - unsaturated group concentration (mol/g) of prepolymer (P) as determined from iodine value]/[hydroxyl group concentration (mol/g) of prepolymer (P) as determined from hydroxyl value].

The average number of introduced silyl groups into a polymer (A) in each of the examples per terminal of the polymer (A) was calculated by NMR measurement.

(Synthesis Example 1)

A polyoxypropylene glycol having a number average molecular weight of about 2,000 was used as an initiator to polymerize propylene oxide in the presence of a zinc hexacyanocobaltate glyme complex catalyst to give a polyoxypropylene (P-1) having, at both terminals thereof, hydroxyl groups, respectively, and having a number average molecular weight of 28,500 (terminal group-based molecular weight 17,700), and molecular weight distribution Mw/Mn=1.21. 1.0 molar equivalent of sodium methoxide relative to the hydroxyl group of the obtained hydroxyl group-terminated polyoxypropylene was added as a 28% methanol solution. Methanol was distilled off therefrom by vacuum devolatilization, and then 1.0 molar equivalent of allyl glycidyl ether relative to the hydroxyl group of the hydroxyl group-terminated polyoxypropylene was added to conduct a reaction at 130°C for 2 hours. Thereafter, a methanol solution of 0.28 molar equivalent of sodium methoxide was added, and methanol was removed. Furthermore, 1.79 molar equivalents of allyl chloride was added to convert the terminal hydroxyl group to an allyl group. 300 parts by weight of n-hexane and 300 parts by weight of water were mixed and stirred with 100 parts by weight of the obtained unrefined allyl group-tenninated

polyoxypropylene, and then water was removed by centrifugation. Then, 300 parts by weight of water was further mixed and stirred with the obtained hexane solution, water was removed by centrifugation again, and then hexane was removed by devolatilization under reduced pressure. As a result, polyoxypropylene (Q-1) having a terminal structure containing two or more carbon-carbon unsaturated bonds, was obtained. It was found that a polymer (Q-1) had 2.0 carbon-carbon unsaturated bonds on average introduced into one terminal moiety.

36 ppm of a platinum divinyldisiloxane complex (3% by weight isopropanol solution based on platinum) was added per 100 parts by weight of the obtained polyoxypropylene (Q-1) having 2.0 carbon-carbon unsaturated bonds on average in one terminal moiety, and 2.2 parts by weight of trimethoxysilane was slowly added dropwise with stirring. The mixed solution was reacted at 90°C for 2 hours, and then unreacted trimethoxysilane was distilled off therefrom under reduced pressure to give a reactive silicon group-containing, linear polyoxypropylene polymer (A-1) having 1.6 trimethoxysilyl groups on average in one terminal moiety, 3.2 silicon groups on average per molecule, and a number average molecular weight of 28,500.

(Synthesis Example 2)

A polyoxypropylene glycol having a number average molecular weight of about 2,000 was used as an initiator to polymerize propylene oxide in the presence of a zinc hexacyanocobaltate glyme complex catalyst to give a polyoxypropylene having, at both terminals thereof, hydroxyl groups, respectively, and having a number average molecular weight of 28,500 (terminal group-based molecular weight 17,700), and molecular weight distribution Mw/Mn=1.21. 1.0 molar equivalent of sodium methoxide relative to the hydroxyl group of the obtained hydroxyl group-terminated polyoxypropylene was added as a 28% methanol solution. Methanol was distilled off therefrom by vacuum devolatilization, and then 1.79 molar equivalent of allyl chloride relative to the hydroxyl group of the hydroxyl group-terminated polyoxypropylene was added to convert the terminal hydroxyl group to an allyl group. 300 parts by weight of n-hexane and 300 parts by weight of water were mixed and stirred with 100 parts by weight of the obtained unrefined allyl group-terminated polyoxypropylene, and then water was removed by centrifugation. Then, 300 parts by weight of water was further mixed and stirred with the obtained hexane solution, water was removed by centrifugation again, and then hexane was removed by devolatilization under reduced pressure. As a result, an allyl group-terminated polyoxypropylene was obtained.

36 ppm of a platinum divinyldisiloxane complex solution was added to 100 parts by weight of the obtained allyl group-tenninated polyoxypropylene, and 1.5 parts by weight of trimethoxysilane was slowly added dropwise with stirring. The mixed solution was reacted at 90°C for 2 hours, and then unreacted trimethoxysilane was distilled off therefrom under reduced pressure to give a reactive silicon group-containing, linear polyoxypropylene polymer (A-2) having 1.6 silicon groups on average per molecule and a number average molecular weight of 28,500.

(Synthesis Example 3)

A polyoxypropylene glycol having a number average molecular weight of about 2,000 was used as an initiator to polymerize propylene oxide in the presence of a zinc hexacyanocobaltate glyme complex catalyst to give a polyoxypropylene having, at both terminals thereof, hydroxyl groups, respectively, and having a number average molecular weight of 14,600 (terminal group-based molecular weight 9,100), and molecular weight distribution Mw/Mn=1.21. 1.0 molar equivalent of sodium methoxide relative to the hydroxyl group of the obtained hydroxyl group-terminated polyoxypropylene was added as a 28% methanol solution. Methanol was distilled off therefrom by vacuum devolatilization, and then 1.79 molar equivalent of allyl chloride relative to the hydroxyl group of the hydroxyl group-terminated polyoxypropylene was added to convert the terminal hydroxyl group to an allyl group. 300 parts by weight of n-hexane and 300 parts by weight of water were mixed and stirred with 100 parts by weight of the obtained unrefined allyl group-tenninated polyoxypropylene, and then water was removed by centrifugation. Then, 300 parts by weight of water was further mixed and stirred with the obtained hexane solution, water was removed by centrifugation again, and then hexane was removed by devolatilization under reduced pressure. As a result, an allyl group-terminated polyoxypropylene was obtained.

36 ppm of a platinum divinyldisiloxane complex solution was added to 100 parts by weight of the obtained allyl group-terminated polyoxypropylene, and 2.0 parts by weight of trimethoxysilane was slowly added dropwise with stirring. The mixed solution was reacted at 90°C for 2 hours, and then unreacted trimethoxysilane was distilled off therefrom under reduced pressure to give a reactive silicon group-containing, linear polyoxypropylene polymer (A-3) having 1.6 silicon groups on average per molecule and a number average molecular weight of 14,600.

(Synthesis Example 4)

36 ppm of a platinum divinyldisiloxane complex (3% by weight isopropanol solution based on platinum) was

added per 100 parts by weight of the polyoxypropylene (Q-1) having 2.0 carbon-carbon unsaturated bonds on average in one terminal moiety which was obtained in Synthesis Example 1, and 1.9 parts by weight of dimethoxymethylsilane was slowly added dropwise with stirring and reacted at 90°C for 2 hours. Then, unreacted dimethoxymethylsilane was distilled off therefrom under reduced pressure to give a reactive silicon group-containing, linear polyoxypropylene polymer (A-4) having 1.6 dimethoxymethylsilyl groups on average in one terminal moiety, 3.2 silicon groups on average per molecule, and a number average molecular weight of 28,500.

(Synthesis Example 5)

48.6 parts by weight of isobutanol was placed in a four-mouthed flask provided with a stirring machine, and the temperature was raised to 105°C under a nitrogen atmosphere. A mixed solution prepared by dissolving 65.0 parts by weight of methyl methacrylate, 25.0 parts by weight of 2-ethylhexyl acrylate, 10.0 parts by weight of 3-methacryloxypropyltrimethoxysilane, 7.2 parts by weight of 3-mercaptopropyltrimethoxysilane, and 2.5 parts by weight of 2,2'-azobis(2-methylbutyronitrile) in 22.7 parts by weight of isobutanol was added dropwise thereto over 5 hours. In addition, polymerization was carried out at 105°C for 2 hours to give an isobutanol solution (solid content 60%) of a reactive silicon group-containing (meth)acrylate ester polymer (B-1) having 1.6 silicon groups on average per molecule and a number average molecular weight of 2,300. The reactive silicon group equivalent of the solid content is 0.72 mmol/g.

(Synthesis Examples 6 to 12)

(Meth)acrylate ester polymers (B-2) to (B-8) were obtained in the same manner as in Synthesis Example 5, except that the monomer composition shown in Table 1 was used.

[Table 1]

| Monomer composition of (meth)acrylate ester polymer (B) | | Tg (°C) of homopolymer | B-1 | B-2 | B-3 | B-4 | B-5 | B-6 | B-7 | B-8 |
|---|---|---|---|---|---|---|---|---|---|---|
| Monomer | MMA(1) | 105 | 65.0 | 65.0 | 65.0 | 47.0 | 35.0 | 5.0 | 5.0 | 65.0 |
| | BMA(2) | 20 | | | | | | | 60.0 | |
| | BA(3) | -55 | | | | 30.0 | 30.0 | 60.0 | | |
| | 2-EHA(4) | -50 | 25.0 | 30.0 | 30.0 | | 25.0 | 25.0 | 25.0 | 26.3 |
| | SMA(5) | - | | | | 10.0 | | | | |
| | DSMA(6) | - | | | | | | | | 9.4 |
| | TSMA(7) | - | 10.0 | 5.0 | 5.0 | 13.0 | 10.0 | 10.0 | 10.0 | |
| | D-MSi(8) | - | | | | | | | | 6.6 |
| | T-MSi(9) | - | 7.2 | 7.2 | 3.6 | 3.6 | 7.2 | 7.2 | 7.2 | |
| | n-DM(10) | - | | | 3.7 | | | | | |
| Mn | | | 2300 | 2170 | 2260 | 3020 | 2188 | 2100 | 2290 | 2080 |
| Mw | | | 3900 | 3950 | 4040 | 5920 | 4055 | 3700 | 3890 | 3670 |
| Average number of silicon groups per molecule | | | 1.6 | 1.1 | 0.79 | 2.0 | 1.5 | 1.5 | 1.6 | 1.5 |
| Reactive silicon group equivalent (mmol/g) | | | 0.72 | 0.56 | 0.36 | 0.68 | 0.72 | 0.72 | 0.72 | 0.72 |

(1) Methyl methacrylate
(2) n-Butyl methacrylate
(3) n-Butyl acrylate
(4) 2-Ethylhexyl acrylate
(5) Stearyl methacrylate
(6) 3-Methacryloxypropyldimethoxymethylsilane
(7) 3-Methacryloxypropyltrimethoxysilane
(8) 3-Mercaptopropyldimethoxymethylsilane
(9) 3-Mercaptopropyltrimethoxysilane
(10) n-Dodecyl mercaptan

(Example 1)

42 parts by weight of the reactive silicon group-containing polyoxypropylene polymer (A-1) obtained in Synthesis Example 1 and the (meth)acrylate ester polymer (B-1) obtained in Synthesis Example 5 were mixed such that the solid content was 28 parts by weight, and then isobutanol was heated and devolatilized. 4 parts by weight of Ancamine K54 (2,4,6-tris(dimethylaminomethyl)phenol from Evonik Industries AG) as an epoxy resin curing agent (D) and 2 parts by weight of KBM-603 (N-(2-aminoethyl)-3-aminopropyltrimethoxysilane from Shin-Etsu Chemical Co., Ltd.) as a silane coupling agent were mixed in the obtained mixture and used as the A agent. 30 parts by weight of Epicoat 828 (bisphenol A type epoxy resin from Mitsubishi Chemical Corporation) as the epoxy resin (C), 0.1 parts by weight of Neostan U-810 (dioctyltin dilaurate from Nitto Kasei Co., Ltd.) as the silanol condensation catalyst (E), and 0.5 parts by weight of water were mixed and used the B agent.

(Shear adhesive strength)

A 3 mm × 25 mm × 100 mm steel plate was used for an adherend, and a curable composition obtained by mixing the A agent and the B agent was applied so that the thickness was 0.5 mm and the area was 25 × 12.5 mm. Immediately after the application, the adherend was adhered and fixed. Thereafter, curing was performed at 23°C and 50% RH for three days and at 50°C for four days. Thereafter, a tensile test was performed using AR-5422 manufactured by Shimadzu Corporation. The test speed was 50 mm/min.

(Dumbbell tensile physical properties)

A sheet having a thickness of about 2 mm was produced by mixing the A agent and the B agent, and cured at 23°C and 50% RH for three days and at 50°C for four days. The sheet was punched out in a No. 3 dumbbell shape. A tensile strength test was performed at 23°C, 50% RH, and stress at 50% elongation (M50), strength at break (TB), elongation at break (EB), and the Young's modulus were measured. Tensile properties other than the Young's modulus were measured using an autograph manufactured by Shimadzu Corporation (AGS-J) at a tension speed of 200 mm/min. The Young's modulus was measured at a tensile speed of 10 mm/min in a range of displacement of 0.05 to 0.3%. The results are shown in Table 2.

(Examples 2 to 7, Comparative Examples 1 to 8)

A composition was prepared in the same manner as in Example 1 except that the blend was replaced by that shown in Table 2, and the shear adhesive strength and the dumbbell tensile physical properties were evaluated. The results are shown in Table 2.

[Table 2]

| | Composition (part(s) by weight) | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|---|---|
| A agent | Polyoxyalkylene polymer (A) | A-1 | 42 | 56 | 63 | | | 48 | 36 | 28 | 70 | | | 18 | 42 | 42 | 100 | |
| | | A-2 | | | | 42 | | | | | | | | | | | | |
| | | A-3 | | | | | 42 | | | | | | | | | | | |
| | | A-4 | | | | | | | | | | 42 | 42 | | | | | |
| | (Meth)acrylate ester polymer (B) | B-1 | 28 | 14 | 7 | 28 | 28 | 32 | 24 | 42 | | 28 | | 12 | 28 | | | 28 |
| | | B-8 | | | | | | | | | | | 28 | | | | | |
| | Epoxy resin curing agent (D) | Ancamine K54(1) | 4 | 4 | 4 | 4 | 4 | 4 | 4 | 4 | 4 | 4 | 4 | 4 | | 4 | | 4 |
| | Silane coupling agent | KBM-603(2) | 2 | 2 | 2 | 2 | 2 | 2 | 2 | 2 | 2 | 2 | 2 | 2 | 2 | 2 | 2 | 2 |
| | (A) : (B) | | 60:40 | 80:20 | 90:10 | 60:40 | 60:40 | 60:40 | 60:40 | 40:60 | 100:0 | 60:40 | 60:40 | 60:40 | 60:40 | 100:0 | 60:40 | 60:40 |
| B agent | Epoxy resin (C) | Epicoat 828(3) | 30 | 30 | 30 | 30 | 30 | 20 | 40 | 30 | 30 | 30 | 30 | 70 | | 30 | | 30 |
| | Silanol condensation catalyst (E) | Neostan U-810(4) | 0.1 | 0.1 | 0.1 | 0.1 | 0.1 | 0.1 | 0.1 | 0.1 | 0.1 | 0.5 | 1.5 | 0.1 | 0.1 | 0.1 | 0.1 | 0.1 |
| | Water | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | (A) + (B) : (C) | | 70:30 | 70:30 | 70:30 | 70:30 | 70:30 | 80:20 | 60:40 | 70:30 | 70:30 | 70:30 | 70:30 | 30:70 | 100:0 | 58:42 | 100:0 | 48:52 |
| Shear adhesive strength Steel plate (23°C*3 days + 50°C*4 days) | | (MPa) | 19.0 | 20.5 | 19.5 | 12.8 | 14.6 | 17.0 | 13.5 | 11.7 | 16.1 | - | - | - | 10.0 | - | 0.8 | 4.4 |
| Dumbbell tensile physical properties (23°C*3 days + 50°C*4 days) | | M50 (MPa) | 16.2 | 8.9 | 5.5 | 15.1 | 15.6 | 6.5 | - | - | 2.8 | 5.8 | 5.7 | - | 1.2 | 7.7 | 0.5 | - |
| | | TB (MPa) | 18.2 | 14.1 | 12.3 | 14.9 | 16.4 | 12.3 | 14.3 | 8.8 | 8.7 | 9.4 | 13.0 | 38.2 | 8.2 | 13.3 | 0.8 | - |
| | | EB (%) | 100 | 160 | 200 | 60 | 60 | 200 | 30 | 2 | 190 | 120 | 225 | 2 | 170 | 120 | 110 | <1 |
| | | Young's modulus (MPa) | 290 | 100 | 35 | 290 | 280 | 95 | 450 | 445 | 7.5 | 50 | 35 | 500 | 6 | 45 | 2 | >1000 |

(1): 2,4,6-Tris(dimethylaminomethyl)phenol (Air Products and Chemicals, Inc.)
(2): N-(2-Aminoethyl)-3-aminopropyltrimethoxysilane (Shin-Etsu Chemical Co., Ltd.)
(3): Bisphenol A type epoxy resin (Mitsubishi Chemical Corporation)
(4): Dioctyltin dilaurate (Nitto Kasei Co., Ltd.)

As shown in Table 2, in addition to having high shear adhesive strength in Examples 1 to 7, the obtained cured product had high strength and also had a high elongation indicated by EB. From this, it can be seen that according to the present invention, a cured product having high rigidity and high flexibility can be obtained.

Compared with these examples, in Comparative Example 1 in which the ratio (A):(B) of the polyoxyalkylene polymer (A) and the (meth)acrylate ester polymer (B) was not within the range of 95:5 to 50:50, Comparative Example 5 in which the weight ratio of the total of (A) and (B):the epoxy resin (C) was not within the range of 90:10 to 50:50, and Comparative Example 9 not containing the polyoxyalkylene polymer (A), the elongation was extremely low. In Comparative Example 2 not containing the (meth)acrylate ester polymer (B) and Comparative Examples 6 and 8 not containing the epoxy resin (C) and the epoxy resin curing agent (D), the rigidity represented by Young's modulus was extremely low. Furthermore, in Comparative Examples 3 and 4 using a polyoxyalkylene polymer (A-4) having a bifunctional reactive silicon group, and Comparative Example 7 not containing the (meth)acrylate ester polymer (B), the rigidity was insufficient. Comparative Examples 3 and 4 are comparative examples to be compared with Example 1 having the same ratio of (A):(B).

(Example 8, Comparative Examples 10 to 13)

A composition was prepared in the same manner as in Example 1 except that the blend was replaced by that shown in Table 3, and the dumbbell tensile physical properties were evaluated. The results are shown in Table 3.

[Table 3]

| Composition (part(s) by weight) | | | Example 8 | Comparative Example 10 | Comparative Example 11 | Comparative Example 12 | Comparative Example 13 |
|---|---|---|---|---|---|---|---|
| A agent | Polyoxyalkylene polymer (A) | A-1 | 42 | 42 | 42 | 42 | 42 |
| | (Meth)acrylate ester polymer (B) | B-1 | 28 | 28 | 28 | 28 | 28 |
| | Epoxy resin curing agent (D) | Ancamine K54(1) | 7 | | | | |
| | | Isophoronediamine | | 7 | | | |
| | | 1,3-Bis(aminomethyl) cyclohexane | | | 7 | | |
| | | Meta-xylenediamine | | | | 7 | |
| | Silane coupling agent | KBM-603(2) | 2 | 2 | 2 | 2 | |
| | | Dynassylan 1146(5) | | | | | 2 |
| | (A) : (B) | | 60:40 | 60:40 | 60:40 | 60:40 | 60:40 |
| B agent | Epoxy resin (C) | Epicoat 828(3) | 30 | 30 | 30 | 30 | 30 |
| | Silanol condensation catalyst (E) | Neostan U-810(4) | 0.1 | 0.1 | 0.1 | 0.1 | 0.1 |
| | Water | | 0.5 | 0.5 | 0.5 | 0.5 | 0.5 |
| | (A) + (B) : (C) | | 70:30 | 70:30 | 70:30 | 70:30 | 70:30 |
| Dumbbell tensile physical properties (23°C*3 days + 50°C*4 days) | | M50 (MPa) | 15.5 | 10.7 | 8.5 | 8.8 | 0.3 |
| | | TB (MPa) | 15.9 | 12.5 | 12.6 | 10.5 | 5.5 |
| | | EB (%) | 120 | 70 | 99 | 66 | 184 |
| | | Young's modulus (MPa) | 290 | 25 | 20 | 17 | <3 |

(1): 2,4,6-Tris(dimethylaminomethyl)phenol (Air Products and Chemicals, Inc.)
(2): N-(2-Aminoethyl)-3-aminopropyltrimethoxysilane (Shin-Etsu Chemical Co., Ltd.)
(3): Bisphenol A type epoxy resin (Mitsubishi Chemical Corporation)
(4): Dioctyltin dilaurate (Nitto Kasei Co., Ltd.)
(5): Amino-modified alkylpolysiloxane (EVONIK)

From Table 3, it can be seen that in Example 8 using the epoxy resin curing agent (D) having a tertiary amine, higher strength, higher elongation, and higher rigidity were obtained compared with Comparative Examples 10 to 13 not using the epoxy resin curing agent (D).

(Examples 9 to 12, Comparative Examples 14 to 16)

A composition was prepared in the same manner as in Example 1 except that the blend was replaced by that shown in Table 4, and the dumbbell tensile physical properties were evaluated. The results are shown in Table 4.

[Table 4]

| Composition (part(s) by weight) | | | Example 9 | Example 10 | Example 11 | Example 12 | Comparative Example 14 | Comparative Example 15 | Comparative Example 16 |
|---|---|---|---|---|---|---|---|---|---|
| A agent | Polyoxyalkylene polymer (A) | A-1 | 42 | 42 | 42 | 42 | 42 | 42 | 42 |
| | (Meth)acrylate ester polymer (B) | B-1 | 28 | | | | | | |
| | | B-2 | | 28 | | | | | |
| | | B-3 | | | 28 | | | | |
| | | B-4 | | | | 28 | | | |
| | | B-5 | | | | | 28 | | |
| | | B-6 | | | | | | 28 | |
| | | B-7 | | | | | | | 28 |
| | Epoxy resin curing agent (D) | Ancamine K54(1) | 4 | 4 | 4 | 4 | 4 | 4 | 4 |
| | Silane coupling agent | KBM-603(2) | 2 | 2 | 2 | 2 | 2 | 2 | 2 |
| | (A) : (B) | | 60:40 | 60:40 | 60:40 | 60:40 | 60:40 | 60:40 | 60:40 |
| B agent | Epoxy resin (C) | Epicoat 828 (3) | 30 | 30 | 30 | 30 | 30 | 30 | 30 |
| | Silanol condensation catalyst (E) | Neostan U-810 (4) | 0.3 | 0.3 | 0.3 | 0.3 | 0.3 | 0.3 | 0.3 |
| | Water | | 0.5 | 0.5 | 0.5 | 0.5 | 0.5 | 0.5 | 0.5 |
| | (A) + (B) : (C) | | 70:30 | 70:30 | 70:30 | 70:30 | 70:30 | 70:30 | 70:30 |
| Dumbbell tensile physical properties (23°C*3 days + 50°C*4 days) | | M50 (MPa) | - | 14.9 | 11.7 | 17.1 | 17.4 | 15.5 | 15.7 |
| | | TB (MPa) | 18.2 | 15.4 | 13.3 | 18.6 | 17.5 | 16.1 | 15.9 |
| | | EB (%) | 90 | 231 | 232 | 130 | 134 | 140 | 154 |
| | | Young's modulus (MPa) | 290 | 174 | 118 | 315 | 167 | 112 | 104 |

(1): 2,4,6-Tris(dimethylaminomethyl)phenol (Air Products and Chemicals, Inc.)
(2): N-(2-Aminoethyl)-3-aminopropyltrimethoxysilane (Shin-Etsu Chemical Co., Ltd.)
(3): Bisphenol A type epoxy resin (Mitsubishi Chemical Corporation)
(4): Dioctyltin dilaurate (Nitto Kasei Co., Ltd.)

From Table 4, it can be seen that in Examples 9 to 12, high strength, high elongation and high rigidity were obtained. Among them, in Examples 9 and 12 using the (meth)acrylate ester polymer (B-1) or (B-4) having a reactive silicon group equivalent of 0.6 mmol/g or more, it can be seen that the rigidity was particularly high. Furthermore, in Example 12 using the (meth)acrylate ester polymer (B-4) containing 40% by weight or more of alkyl (meth)acrylate having 1 to 3 alkyl carbon atoms and 40% by weight or more of alkyl (meth)acrylate having 4 to 30 alkyl carbon atoms, it can be seen that the strength and flexibility were excellent in addition to high rigidity. Compared with these examples, in Comparative Examples 14 to 16 using the (meth)acrylate ester polymers (B-5) to (B-7) containing less than 40% by weight of alkyl (meth)acrylate having 1 to 3 alkyl carbon atoms and not using the (meth)acrylate ester polymer containing 40% by weight or more of alkyl (meth)acrylate having 1 to 3 alkyl carbon atoms, it can be seen that either the elongation or the rigidity was poor, and the rigidity is significantly inferior to that in Example 12 in which the elongation is about the same.

(Examples 13 and 14)

A composition was prepared in the same manner as in Example 1 except that the blend was replaced by that shown in Table 5, and the curing conditions in the evaluation of the dumbbell tensile physical properties were changed such that curing was performed at 80°C for 30 minutes and at 23°C for 7 days, and the dumbbell tensile physical properties was evaluated. The results are shown in Table 5.

[Table 5]

| Composition (part(s) by weight) | | | Example 13 | Example 14 |
|---|---|---|---|---|
| A agent | Polyoxyalkylene polymer (A) | A-1 | 42 | 42 |
| | (Meth)acrylate ester polymer (B) | B-1 | 28 | 14 |
| | | B-6 | | 14 |
| | Epoxy resin curing agent (D) | Ancamine K54(1) | 7 | 7 |
| | Silane coupling agent | KBM-603(2) | 2 | 2 |
| | (A) : (B) | | 60:40 | 60:40 |
| B agent | Epoxy resin (C) | Epicoat 828(3) | 30 | 30 |
| | Silanol condensation catalyst (E) | Neostan U-810(4) | 0.3 | 0.3 |
| | Water | | 0.5 | 0.5 |
| | (A) + (B) : (C) | | 70:30 | 70:30 |
| Dumbbell tensile physical properties (80°C*30 min + 23°C*7 days) | | M50 (MPa) | 11.6 | 10.3 |
| | | TB (MPa) | 12.0 | 13.9 |
| | | EB (%) | 120 | 259 |
| | | Young's modulus (MPa) | 125 | 160 |

(1): 2,4,6-Tris(dimethylaminomethyl)phenol (Air Products and Chemicals, Inc.)
(2): N-(2-Aminoethyl)-3-aminopropyltrimethoxysilane (Shin-Etsu Chemical Co., Ltd.)
(3): Bisphenol A type epoxy resin (Mitsubishi Chemical Corporation)
(4): Dioctyltin dilaurate (Nitto Kasei Co., Ltd.)

As shown in Table 5, high strength, high elongation, and high rigidity were obtained in both Examples 13 and 14. However, in Example 14 using both the (meth)acrylate ester polymer (B-1) containing 40% by weight or more of alkyl (meth)acrylate having 1 to 3 alkyl carbon atoms and the (meth)acrylate ester polymer (B-6) containing 40% by weight or more of alkyl (meth)acrylate having 4 to 30 alkyl carbon atoms, both the elongation and the rigidity were improved compared with Example 13 using only (B-1).

(Examples 15 to 17, Comparative Examples 17 and 18)

The blend was replaced by that shown in Table 6, and the curing conditions in the evaluation of the shear adhesive strength and the dumbbell tensile physical properties were determined such that curing was performed at 80°C for 30 minutes and at 23°C for 7 days, and a dumbbell tensile test was performed in the same manner as in Example 1. Using aluminum (A5083P) as a test body, the shear adhesive strength was evaluated in the same manner as in Example 1. In the evaluation of the shear adhesive strength, a measure of the work required to break was calculated from an amount of displacement leading to break and its stress × a strain curve. The results are shown in Table 6.

[Table 6]

| | Composition (part(s) by weight) | | Example 15 | Example 16 | Example 17 | Comparative Example 17 | Comparative Example 18 |
|---|---|---|---|---|---|---|---|
| A agent | Polyoxyalkylene polymer (A) | A-1 | 63 | 56 | 42 | | 42 |
| | | A-4 | | | | 70 | |
| | (Meth)acrylate ester polymer (B) | B-1 | 7 | 14 | 28 | | 28 |
| | Epoxy resin curing agent (D) | Ancamine K54(1) | 4 | 4 | 4 | 4 | |
| | Silane coupling agent | KBM-603(2) | 3 | 3 | 3 | 3 | 3 |
| | (A) : (B) | | 90:10 | 80:20 | 60:40 | 100:0 | 60:40 |
| B agent | Epoxy resin (C) | Epicoat 828 (3) | 30 | 30 | 30 | 30 | 30 |
| | Filler | DAM-05(4) | 5 | 5 | 5 | 5 | 5 |
| | | R-202(5) | 3 | 3 | 3 | 3 | 3 |
| | Silanol condensation catalyst (E) | Neostan U-810 (6) | 0.1 | 0.1 | 0.3 | 1 | 0.3 |
| | Water | | 0.5 | 0.5 | 0.5 | 0.5 | 0.5 |
| | (A) + (B) : (C) | | 70:30 | 70:30 | 70:30 | 70:30 | 70:30 |
| Dumbbell tensile physical properties (80°C*30 min + 23°C*7 days) | | M50 (MPa) | 5.0 | 7.3 | 11.2 | 1.0 | 1.0 |
| | | TB (MPa) | 12.8 | 13.0 | 12.2 | 8.7 | 7.5 |
| | | EB (%) | 370 | 365 | 240 | 450 | 210 |
| | | Young's modulus (MPa) | 44 | 100 | 250 | 5 | <3 |
| Shear adhesive strength Aluminum (A5083P) (80°C*30 min + 23°C*7 days) | | Break strength (MPa) | 14.8 | 15.0 | 15.6 | 10.0 | 9.0 |
| | | Displacement (mm) | 4.3 | 4.5 | 3.6 | 4.5 | 3.5 |
| | | Work (J) | 11.8 | 13.5 | 11.8 | 6.4 | 5.0 |

(1): 2,4,6-Tris(dimethylaminomethyl)phenol (Air Products and Chemicals, Inc.)
(2): N-(2-Aminoethyl)-3-aminopropyltrimethoxysilane (Shin-Etsu Chemical Co., Ltd.)
(3): Bisphenol A type epoxy resin (Mitsubishi Chemical Corporation)
(4) : Alumina (Denka Company Limited.)
(5): Fumed silica (Aerosol Co.)
(6): Dioctyltin dilaurate (Nitto Kasei Co., Ltd.)

From Table 6, it can be seen that in Examples 15 to 17, high strength, high elongation, and high rigidity were obtained, and on the other hand, in Comparative Example 17 using the polyoxyalkylene polymer (A-4) having a bifunctional reactive silicon group and not using the (meth)acrylate ester polymer (B) and Comparative Example 18 not using the epoxy resin curing agent (D), the rigidity was extremely low. Furthermore, it can be seen that in Examples 15 to 17, the measure of the work required to break in a shear adhesive strength test was large compared with Comparative Examples 17 and 18, and adhesive breaking energy after adhesion was large.

## Claims

**1.** A multi-pack curable composition comprising:

an A agent comprising a polyoxyalkylene polymer (A) having a reactive silicon group represented by a general formula (1), a (meth)acrylate ester polymer (B) having a reactive silicon group represented by the general formula (1), and an epoxy resin curing agent (D) having a tertiary amine; and
a B agent comprising an epoxy resin (C) and a silanol condensation catalyst (E),
wherein a weight ratio of the polyoxyalkylene polymer (A):the (meth)acrylate ester polymer (B) is 95:5 to 50:50, a weight ratio of a total of the polyoxyalkylene polymer (A) and the (meth)acrylate ester polymer (B):the epoxy resin (C) is 90:10 to 50:50, and the (meth)acrylate ester polymer (B) contains a polymer containing 40% by weight or more of alkyl (meth)acrylate having 1 to 3 alkyl carbon atoms in a total monomer:

$$-SiX_3 \qquad (1)$$

(wherein X represents a hydroxyl group or a hydrolyzable group).

**2.** The multi-pack curable composition according to claim 1, wherein the (meth)acrylate ester polymer (B) further

contains a polymer containing 40% by weight or more of alkyl (meth)acrylate having 4 to 30 alkyl carbon atoms in the total monomer.

3. The multi-pack curable composition according to claim 1, wherein the polymer containing 40% by weight or more of alkyl (meth)acrylate having 1 to 3 alkyl carbon atoms in the total monomer is a copolymer further containing 40% by weight or more of alkyl (meth)acrylate having 4 to 30 alkyl carbon atoms in the total monomer.

4. The multi-pack curable composition according to any one of claims 1 to 3, wherein the weight ratio of the polyoxyalkylene polymer (A):the (meth)acrylate ester polymer (B) is 70:30 to 50:50.

5. The multi-pack curable composition according to any one of claims 1 to 4, wherein the weight ratio of the total of the polyoxyalkylene polymer (A) and the (meth)acrylate ester polymer (B):the epoxy resin (C) is 80:20 to 60:40.

6. The multi-pack curable composition according to any one of claims 1 to 5, wherein the epoxy resin curing agent (D) having a tertiary amine is an aromatic amine.

7. The multi-pack curable composition according to any one of claims 1 to 6, wherein the epoxy resin curing agent (D) having a tertiary amine has three or more amino groups.

8. The multi-pack curable composition according to any one of claims 1 to 7, wherein the B agent further comprises water (F).

9. The multi-pack curable composition according to any one of claims 1 to 8, wherein a terminal moiety of the polyoxyalkylene polymer (A) has a structure represented by a general formula (2):

[CHEM. 1]

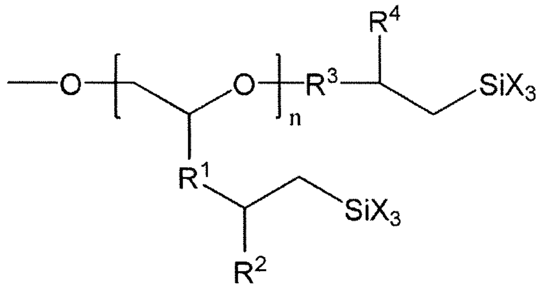

(2)

(wherein $R^1$ and $R^3$ are each independently a divalent linking group having 1 to 6 carbon atoms and an atom that binds to each carbon atom adjacent to $R^1$ and $R^3$ is any of carbon, oxygen and nitrogen; $R^2$ and $R^4$ are each independently hydrogen or a hydrocarbon group having 1 to 10 carbon atoms; n is an integer of 1 to 10; and X is a hydroxyl group or a hydrolyzable group).

10. The multi-pack curable composition according to claim 9, wherein in the general formula (2), $R^1$ is $CH_2OCH_2$, and $R^3$ is $CH_2$.

11. The multi-pack curable composition according to claim 9 or 10, wherein $R^2$ and $R^4$ in the general formula (2) are hydrogen atoms.

12. The multi-pack curable composition according to any one of claims 1 to 11, wherein the (meth)acrylate ester polymer (B) has a reactive silicon group equivalent of 0.6 mmol/g or more and 1.0 mmol/g or less.

13. The multi-pack curable composition according to any one of claims 1 to 12, wherein a Young's modulus at 23°C of a cured product of the curable composition is 20 MPa or more, and an elongation at break at 23°C of the cured product is 80% or more.

14. The multi-pack curable composition according to any one of claims 1 to 13, being a two-liquid curable composition consisting of the A agent and the B agent.

15. A structural adhesive comprising the multi-pack curable composition according to any one of claims 1 to 14.

16. A cured product obtained by curing the multi-pack curable composition according to any one of claims 1 to 14.

**Patentansprüche**

1. Eine härtbare Multipack-Zusammensetzung, umfassend:

   ein Mittel A, umfassend ein Polyoxyalkylen-Polymer (A) mit einer reaktiven Siliciumgruppe dargestellt durch eine allgemeine Formel (1), ein (Meth)acrylatester-Polymer (B) mit einer reaktiven Siliciumgruppe dargestellt durch die allgemeine Formel (1), und ein Epoxyharz-Härtungsmittel (D) mit einem tertiären Amin; und
   ein Mittel B, umfassend ein Epoxyharz (C) und einen Silanol-Kondensationskatalysator (E),
   wobei ein Gewichtsverhältnis des Polyoxyalkylen-Polymers (A) zu dem (Meth)acrylatester-Polymer (B) 95:5 bis 50:50 beträgt, ein Gewichtsverhältnis einer Gesamtheit des Polyoxyalkylen-Polymers (A) und des (Meth)acrylatester-Polymers (B) zu dem Epoxyharz (C) 90:10 bis 50:50 beträgt und das (Meth)acrylatester-Polymer (B) ein Polymer enthält, das 40 Gew.-% oder mehr Alkyl(meth)acrylat mit 1 bis 3 Alkylkohlenstoffatomen in einem Gesamtmonomer enthält:

   $$-SiX_3 \qquad (1)$$

   (wobei X eine Hydroxylgruppe oder eine hydrolysierbare Gruppe darstellt).

2. Die härtbare Multipack-Zusammensetzung nach Anspruch 1, wobei das (Meth)acrylatester-Polymer (B) weiter ein Polymer enthält, das 40 Gew.-% oder mehr Alkyl(meth)acrylat mit 4 bis 30 Alkylkohlenstoffatomen im Gesamtmonomer enthält.

3. Die härtbare Multipack-Zusammensetzung nach Anspruch 1, wobei das Polymer, das 40 Gew.-% oder mehr Alkyl(meth)acrylat mit 1 bis 3 Alkylkohlenstoffatomen im Gesamtmonomer enthält, ein Copolymer ist, das weiter 40 Gew.-% oder mehr Alkyl(meth)acrylat mit 4 bis 30 Alkylkohlenstoffatomen im Gesamtmonomer enthält.

4. Die härtbare Multipack-Zusammensetzung nach einem der Ansprüche 1 bis 3, wobei das Gewichtsverhältnis des Polyoxyalkylen-Polymers (A) zu dem (Meth)acrylatester-Polymer (B) 70:30 bis 50:50 beträgt.

5. Die härtbare Multipack-Zusammensetzung nach einem der Ansprüche 1 bis 4, wobei das Gewichtsverhältnis der Gesamtheit des Polyoxyalkylen-Polymers (A) und des (Meth)acrylatester-Polymers (B) zu dem Epoxyharz (C) 80:20 bis 60:40 beträgt.

6. Die härtbare Multipack-Zusammensetzung nach einem der Ansprüche 1 bis 5, wobei das Epoxyharz-Härtungsmittel (D), das ein tertiäres Amin aufweist, ein aromatisches Amin ist.

7. Die härtbare Multipack-Zusammensetzung nach einem der Ansprüche 1 bis 6, wobei das Epoxyharz-Härtungsmittel (D), das ein tertiäres Amin aufweist, drei oder mehr Aminogruppen aufweist.

8. Die härtbare Multipack-Zusammensetzung nach einem der Ansprüche 1 bis 7, wobei das Mittel B weiter Wasser (F) umfasst.

9. Die härtbare Multipack-Zusammensetzung nach einem der Ansprüche 1 bis 8, wobei eine endständige Einheit des Polyoxyalkylen-Polymers (A) eine durch eine allgemeine Formel (2) dargestellte Struktur aufweist:

[CHEM. 1]

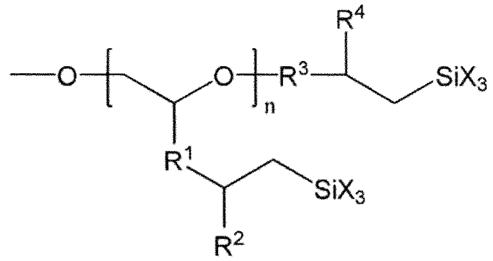

(2)

(wobei $R^1$ und $R^3$ jeweils unabhängig eine zweiwertige Verbindungsgruppe mit 1 bis 6 Kohlenstoffatomen sind und ein Atom, das an jedes zu $R^1$ und $R^3$ benachbarte Kohlenstoffatom bindet, eines aus Kohlenstoff, Sauerstoff und Stickstoff ist; $R^2$ und $R^4$ jeweils unabhängig Wasserstoff oder ein Kohlenwasserstoffrest mit 1 bis 10 Kohlenstoffatomen sind; n eine ganze Zahl von 1 bis 10 ist; und X eine Hydroxylgruppe oder eine hydrolysierbare Gruppe ist).

**10.** Die härtbare Multipack-Zusammensetzung nach Anspruch 9, wobei in der allgemeinen Formel (2) $R^1$ gleich $CH_2OCH_2$ ist und $R^3$ gleich $CH_2$ ist.

**11.** Die härtbare Multipack-Zusammensetzung nach Anspruch 9 oder 10, wobei $R^2$ und $R^4$ in der allgemeinen Formel (2) Wasserstoffatome sind.

**12.** Die härtbare Multipack-Zusammensetzung nach einem der Ansprüche 1 bis 11, wobei das (Meth)acrylatester-Polymer (B) ein reaktives Siliciumgruppen-Äquivalent von 0,6 mMol/g oder mehr und 1,0 mMol/g oder weniger aufweist.

**13.** Die härtbare Multipack-Zusammensetzung nach einem der Ansprüche 1 bis 12, wobei ein Elastizitätsmodul bei 23°C eines gehärteten Produkts der härtbaren Zusammensetzung 20 MPa oder mehr beträgt und eine Bruchdehnung bei 23°C des gehärteten Produkts 80% oder mehr beträgt.

**14.** Die härtbare Multipack-Zusammensetzung nach einem der Ansprüche 1 bis 13, bei der es sich um eine härtbare Zusammensetzung aus zwei Flüssigkeiten handelt, die aus dem Mittel A und dem Mittel B besteht.

**15.** Ein Strukturkleber, umfassend die härtbare Multipack-Zusammensetzung nach einem der Ansprüche 1 bis 14.

**16.** Ein gehärtetes Produkt, erhalten durch Härten der härtbaren Multipack-Zusammensetzung nach einem der Ansprüche 1 bis 14.

## Revendications

**1.** Composition durcissable à plusieurs composants comprenant :

un agent A comprenant un polymère de polyoxyalkylène (A) ayant un groupe siliconé réactif représenté par la formule générale (1), un polymère d'ester (méth)acrylate (B) ayant un groupe siliconé réactif représenté par la formule générale (1), et un agent durcisseur de résine époxy (D) ayant une amine tertiaire ; et
un agent B comprenant une résine époxy (C) et un catalyseur de condensation de silanol (E),
dans laquelle le rapport en poids du polymère de polyoxyalkylène (A) au polymère d'ester (méth)acrylate (B) est de 95/5 à 50/50, le rapport en poids du total du polymère de polyoxyalkylène (A) et du polymère d'ester (méth)acrylate (B) à la résine époxy (C) est de 90/10 à 50/50, et le polymère d'ester (méth)acrylate (B) contient un polymère contenant 40 % en poids ou plus de (méth)acrylate d'alkyle ayant 1 à 3 atomes de carbone d'alkyle dans le monomère total :

$$-SiX_3 \qquad (1)$$

(dans laquelle X représente un groupe hydroxyle ou un groupe hydrolysable).

**2.** Composition durcissable à plusieurs composants selon la revendication 1, dans laquelle le polymère d'ester (méth)acrylate (B) contient en outre un polymère contenant 40 % en poids ou plus de (méth)acrylate d'alkyle ayant 4 à 30 atomes de carbone d'alkyle dans le monomère total.

**3.** Composition durcissable à plusieurs composants selon la revendication 1, dans laquelle le polymère contenant 40 % en poids ou plus de (méth)acrylate d'alkyle ayant 1 à 3 atomes de carbone d'alkyle dans le monomère total est un copolymère contenant en outre 40 % en poids ou plus de (méth)acrylate d'alkyle ayant 4 à 30 atomes de carbone d'alkyle dans le monomère total.

**4.** Composition durcissable à plusieurs composants selon l'une quelconque des revendications 1 à 3, dans laquelle le rapport en poids du polymère de polyoxyalkylène (A) au polymère d'ester (méth)acrylate (B) est de 70/30 à 50/50.

**5.** Composition durcissable à plusieurs composants selon l'une quelconque des revendications 1 à 4, dans laquelle le rapport en poids du total du polymère de polyoxyalkylène (A) et du polymère d'ester (méth)acrylate (B) à la résine époxy (C) est de 80/20 à 60/40.

**6.** Composition durcissable à plusieurs composants selon l'une quelconque des revendications 1 à 5, dans laquelle l'agent durcisseur de résine époxy (D) ayant une amine tertiaire est une amine aromatique.

**7.** Composition durcissable à plusieurs composants selon l'une quelconque des revendications 1 à 6, dans laquelle l'agent durcisseur de résine époxy (D) ayant une amine tertiaire a trois ou plus de trois groupes amino.

**8.** Composition durcissable à plusieurs composants selon l'une quelconque des revendications 1 à 7, dans laquelle l'agent B comprend en outre de l'eau (F).

**9.** Composition durcissable à plusieurs composants selon l'une quelconque des revendications 1 à 8, dans laquelle un fragment terminal du polymère de polyoxyalkylène (A) a une structure représentée par la formule générale (2) :

[formule chimique 1]

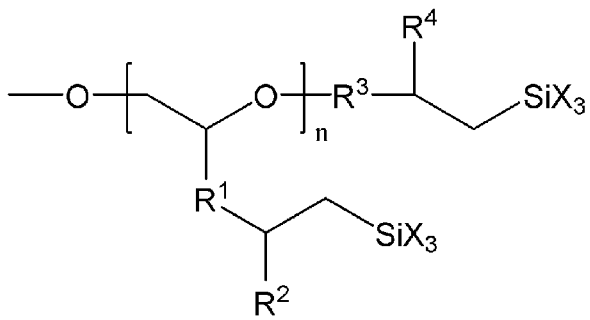

**(2)**

(dans laquelle chacun de $R^1$ et $R^3$ est indépendamment un groupe de liaison divalent ayant 1 à 6 atomes de carbone et un atome qui se lie à chaque atome de carbone adjacent à $R^1$ à $R^3$ est l'un quelconque parmi le carbone, l'oxygène et l'azote ; chacun de $R^2$ et $R^4$ est indépendamment l'hydrogène ou un groupe hydrocarboné ayant 1 à 10 atomes de carbone ; n est un entier de 1 à 10 ; et X est un groupe hydroxyle ou un groupe hydrolysable).

**10.** Composition durcissable à plusieurs composants selon la revendication 9, dans laquelle, dans la formule générale (2), $R^1$ est $CH_2OCH_2$, et $R^3$ est $CH_2$.

**11.** Composition durcissable à plusieurs composants selon la revendication 9 ou 10, dans laquelle $R^2$ et $R^4$ dans la formule générale (2) sont des atomes d'hydrogène.

**12.** Composition durcissable à plusieurs composants selon l'une quelconque des revendications 1 à 11, dans laquelle le polymère d'ester (méth)acrylate (B) a un équivalent de groupe siliconé réactif de 0,6 mmol/g ou plus et 1,0 mmol/g ou moins.

**13.** Composition durcissable à plusieurs composants selon l'une quelconque des revendications 1 à 12, dans laquelle le module de Young à 23°C d'un produit durci de la composition durcissable est de 20 MPa ou plus, et l'allongement

à la rupture à 23°C du produit durci est de 80 % ou plus.

14. Composition durcissable à plusieurs composants selon l'une quelconque des revendications 1 à 13, qui est une composition durcissable en deux liquides consistant en l'agent A et l'agent B.

15. Adhésif structurel comprenant la composition durcissable à plusieurs composants selon l'une quelconque des revendications 1 à 14.

16. Produit durci obtenu par durcissement de la composition durcissable à plusieurs composants selon l'une quelconque des revendications 1 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H02214759 A
- JP 2015105324 A
- WO 2013180203 A
- JP 2017019908 A
- JP S59122541 A
- JP S63112642 A
- JP H06172631 A
- JP H11116763 A
- JP H04283259 A
- JP H09194731 A